(19) Europäisches Patentamt
European Patent Office
Office européen des brevets

(11) Numéro de publication: **0 013 217**
**B1**

(12) # FASCICULE DE BREVET EUROPEEN

(45) Date de publication du fascicule du brevet: **06.10.82**

(51) Int. Cl.³: **C 02 F 1/52**

(21) Numéro de dépôt: **79401017.3**

(22) Date de dépôt: **14.12.79**

(54) **Procédé de floculation pour la purification des eaux.**

(30) Priorité: **28.12.78 FR 7836644**

(43) Date de publication de la demande: **09.07.80 Bulletin 80/14**

(45) Mention de la délivrance du brevet: **06.10.82 Bulletin 82/40**

(84) Etats contractants désignés: **DE FR IT NL SE**

(56) Documents cités:
**DE-A-1 517 666**
**FR-A-2 263 982**
**FR-A-2 267 372**
**US-A-3 406 114**
**US-A-3 763 039**

(73) Titulaire: **RHONE-POULENC SPECIALITES CHIMIQUES, "Les miroirs" 18, Boucle d'Alsace, F-92400 Courbevoie (FR)**

(72) Inventeur: **Meiller, François, 10, rue Jeanne d'Arc, F-91120 - Palaiseau (FR)**
Inventeur: **Le Du, Yannick, 13bis, rue Edmond Nocard, F-94700 - Maisons Alfort (FR)**

(74) Mandataire: **Dutruc-Rosset, Marie-Claude et al, RHONE POULENC RECHERCHES Service Brevets Chimie et Polymères 25, Quai Paul Doumer, F-92408 Courbevoie Cedex (FR)**

**EP 0 013 217 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé de floculation pour la purification des eaux

La présente invention a trait à un procédé de floculation pour la purification des eaux notamment pour la purification des eaux potables.

Il est connu, dans le traitement des eaux et des boues, de faire appel à des agents de floculation constitués par des sels métalliques tels que $CaCl_2$, $FeCl_2$, $FeCl_3$, $FeSO_4$ ou $Fe_2(SO_4)_3$ ou des mélanges de ces sels métalliques comme décrit dans le brevet français 1 399 351.

Le brevet US 3 406 114 enseigne un procédé de floculation des eaux à l'aide de polysaccharides obtenus par fermentation d'un hydrate de carbone sous l'action de bactéries du genre XANTHOMONAS, ARTHROBACTER.

Le FR 2 263 982 enseigne un procédé pour débarasser les eaux usées des huiles, solvants et ingrédients de peinture à l'aide de polysaccharides modifiés à propriétés anioniques ou cationiques associés à des agents de floculation cationique ou anionique tels que des polyacrylamides ou des polyacrylates éventuellement associés à des agents de floculation minéraux tels que sulfates ou chlorures de fer ou d'aluminium.

Une des grandes difficaltés du traitement des eaux réside dans le fait que la nature des eaux à traiter est éminemment variable d'un lieu à un autre et même pour un même lieu d'un jour à l'autre, ce qui fait qu'une solution valable pour une eau n'est pas transposable dès que les conditions changent.

Un objet essentiel de la présente invention est précisément d'apporter une solution valable d'une maniere générale.

Il a maintenant été trouvé un procédé de floculation pour la purification des eaux consistant à traiter cellesci par un agent floculant constitué d'un sel de fer et/ou d'aluminium et par un adjuvant de floculation à base de polysaccharide, caractérisé par le fait que l'on traite une eau à un PH compris entre 6 et 9 d'abord par l'agent floculant, puis on ajoute, sous forte agitation, l'adjuvant de floculation, ce dernier comprenant un hétéropolysaccharide de haute masse moléculaire obtenu par fermentation d'un hydrate de carbone sous l'action des bactéries du genre XANTHOMONAS, ARTHRIBACTER ou des champignons du genre SCLEROTIUM.

Dans l'exposé qui suit de la présente invention, on entend sous le terme »hétéropolysaccharide« les produits exocellulaires linéaires de poids moléculaire élevé, de préférence supérieur à un million, obtenus par fermentation d'un hydrate de carbone sous l'action de bactéries du genre XANTHOMONAS ou ARTHROBACTER ou des champignons appartenant au genre SCLEROTIUM.

Les espèces représentatives de bactéries ou de champignons, dont on peut se servir pour la fabrication de ces hétéropolysaccharides comprennent par exemple: XANTHOMONAS BEGONIAE, le XANTHOMONAS CAMPESTRIS, le XANTHOMONAS CAROTAE, le XANTHOMONAS HEDERAE, le XANTHOMONAS INCANAE;, le XANTHOMONAS MALVACEARUM, le XANTHOMONAS PAPAVERICOLA, le XANTHOMONAS PHASEOLI, le XANTHOMONAS PISI, le XANTHOMONAS VASCULORUM, le XANTHOMONAS VESICATORIA, le XANTHOMONAS VITIANS, le XANTHOMONAS PELARGONII; l'ARTHROBACTER STABILIS, l'ARTHROBACTER VISCOSUS; le SCLEROTIUM GLUCANICUM, le SCLEROTIUM ROLFII.

Les espèces qui sont particulièrement adaptées à ce type de fermentation comprennent le XANTHOMONAS BEGONIAE, le XANTHOMONAS COMPESTRIS, le XANTHOMONAS INCANAE et le XANTHOMONAS PISI.

L'espèce XANTHOMONAS CAMPESTRIS convient tout particulièrement bien pour la mise en oeuvre de la présente invention.

On peut faire fermenter toute une variété d'hydrates de carbone avec les micro-organismes appartenant aux genres précités pour fabriquer l'hétéropolysaccharide utilisé dans le procédé de floculation selon l'invention. Les hydrates de carbone qui peuvent convenir comprennent le glucose, le saccharose, le fructose, le maltose, le lactose, l'amidon soluble, l'amidon de maïs, l'amidon de pomme de terre. La fermentation de l'hydrate de carbone se fait en général dans un milieu aqueux renfermant jusqu'à 60 g/l de glucide. On sait que le milieu de fermentation peut comprendre, en outre, une source de phosphore, une source de magnésium qui est un activateur d'enzymes et une source d'azote qui est habituellement constituée par des »solubles de distilleries« (brevet américain n° 3.000.790), du son ou des farines de grains entiers tels que le sorgho, le soja ou le maïs (cf. brevet américain n° 3.271.267), du »corn steep« (cf. brevet américain n° 3.355.447), ou encore des composés azotés minéraux tels que le nitrate d'ammonium (cf. brevet américain n° 3.391.060) ou le phosphate d'ammonium (cf. demande de brevet français n° 2 342 339).

Pour l'application envisagée dans la présente demande, les moûts bruts de fermentation peuvent être utilisés. Il peut être avantageux, avant emploi, de soumettre le moût fermenté à un chauffage dans un domaine de température de 80 à 130° C pendant environ 10 minutes à environ 1 heure.

L'hétéropolysaccharide peut être aussi isolé du moût de fermentation et être utilisé sous forme de poudre. La séparation du polysaccharide du moût, éventuellement chauffé au préalable comme indiqué ci-avant, peut se faire grâce aux méthodes habituelles, par exemple en le précipitant par addition à ce moût d'un alcool inférieur comme le méthanol, l'éthanol, l'isopropanol, le butanol tertiaire ou d'acétone ou d'un mélange de ces agents de précipitation. Une fois précipité, le

polysaccharide est séparé, lavé avec le liquide de précipitation, puis il est séché et broyé.

Si l'application envisagée dans la présente demande rend nécessaire une purification de l'adjuvant de floculation selon l'invention, on peut faire appel dans cette optique aux méthodes connues de l'art antérieur consistant par exemple à soumettre le moût fermenté, ou bien le gel aqueux reconstitué à partir de l'hétéropolysaccharide extrait du moût, à des opérations de centrifugation ou de filtration sur terres à diatomées, à l'action des enzymes du type protéase (cf. brevet français n° 2.264.077) ou de la soude (cf. brevet américain n° 3.729.460).

Pour l'application envisagée dans la présente demande, on peut utiliser l'hétéropolysaccharide seul comme décrit ci-dessus, éventuellement celui-ci peut être mélangé à d'autres gommes ou leurs dérivés, telles que: la gomme de caroube, le gomme agar-agar, les guaranates, les alginates.

L'agent floculant peut être constitué par un floculant habituel, notamment à base de fer et/ou d'aluminium tel que sulfate, chlorure, hydroxychlorure d'aluminium, chlorure ferrique ou chlorosulfate ferrique.

Eventuellement, on peut ajouter un additif constitué par un sel soluble dans le milieu, essentiellement d'un métal du groupe IIa de la classification périodique de l'aluminium, du zinc, du cuivre et du manganèse. On se réfèrera à la demande française n° 2 432 998 déposée le 7 Août 1978 au nom de la demanderesse.

En particulier, cet additif peut être constitué par un sel de magnésium ou de l'aluminium, notamment par du chlorure, nitrate ou acétate de ces métaux.

On décrit, ci-après, le mise en oeuvre du procédé de l'invention.

On a constaté, de manière inattendue, qu'il est nécessaire d'introduire dans l'eau à traiter, d'abord l'agent de floculation comprenant éventuellement un additif tel que défini précédemment, puis l'adjuvant de floculation comprenant ledit hétéropolysaccharide.

D'une manière préferentielle, l'ajout de l'hétéropolysaccharide s'effectue dans un délai variant, par exemple, de I à 5 minutes par rapport à la mise en oeuvre de l'agent floculant.

Dans le cas de l'ajout d'un additif à l'agent floculant, celui-ci peut être amené soit conjointement avec l'agent floculant, soit séparément mais en même temps que ce dernier.

On a également observé que la mise en contact entre l'eau à traiter et l'agent de floculation, doit être rapide. C'est pourquoi, il est préférable de maintenir l'eau à traiter sous forte agitation réalisée par les dispositifs habituellement utilisés dans le domaine considéré (PERRY et CHILTON — 5° édition 1973).

On procède aussi à l'adjonction de l'adjuvant de floculation, sous forte agitation, mais pendant un temps bref. Généralement, 1 à 2 minutes suffisent.

Ensuite, on maintient le milieu sous une agitation lente pendant par exemple de 15 à 30 minutes, puis on arrête l'agitation afin de permettre la décantation. Sans pour autant limiter l'invention, on donne des vitesses d'agitation utilisées dans les exemples.

Les agents floculants et les adjuvants de floculation peuvent être mis en oeuvre sous forme de poudre mais il est préférable de les employer sous forme de solution.

Pour les agents floculants à base d'aluminium, on utilise habituellement des solutions de sulfate d'aluminium hydratée à 630 g/litre correspondant à 8% d'oxyde d'aluminium $Al_2O_3$ à raison, d'environ 5 à 150 $cm^3$ par $m^3$ d'eau traitée; des solutions de chlorure d'aluminium à 700 g/l correspondant à 15% d'oxyde d'aluminium $Al_2O_3$ à raison, d'environ 10 à 100 $cm^3$ par $m^3$ d'eau traitée: des solutions d'hydroxychlorure d'aluminium à 10% d'oxyde d'aluminium à raison, d'environ 10 à 100 $cm^3/m^3$ d'eau traitée.

Pour les agents floculants à base de fer, on utilise des solutions de chlorure ferrique à 600 g/l ou de chlorosulfate ferrique à 685 g/l correspondant à 200 g/l de fer à raison, d'environ 15 à 60 $cm^3$ par $m^3$ d'eau traitée.

Les valeurs sont données à titre indicatif et seront adaptées par l'homme de l'art en fonction de nombreux paramètres, notamment de la nature de l'eau et de sa température, de l'agent floculant, de sa concentration dans la solution.

En ce qui concerne l'adjuvant de floculation, il s'utilise habituellement en solutions de 1 à 5 g/l. On mettra en oeuvre, de 0,3 à 1 g d'hétéropolysaccharide par $m^3$ d'eau à traiter.

Comme déjà dit précédemment, le procédé selon l'invention, s'adapte au traitement des eaux et en particulier à celui des eaux potables qui exigent un degré de pureté plus important.

On se réfèrera maintenant pour donner une compréhension plus complète de l'invention aux exemples 1 à 31.

## Exemples

Avant de détaillier les exemples, on précisera:

- les caractéristiques de l'eau à traiter.
- la préparation de l'adjuvant de floculation utilisé.
- les conditions de réalisation des essais qui restent identiques dans tous les cas, sauf mention contraire.

I. On réalise une série d'essais avec une eau brute ayant les caractéristiques suivantes:

| | |
|---|---|
| Température | 19° C |
| pH | 7,7 |
| MO | 1,5 (matières organiques exprimées selon la quantité d'oxygène qu'il faut pour les oxyder exprimée en mg/l d'oxygène selon la norme NF 90 018 de Janvier 1960). |
| TAC | 18,5 (titre alcalimétrique complet selon J. Rodier l'Analyse de l'eau — Dunod — page 106). |
| TH | 21 (titre hydrométrique) NF 90 003 |
| Turbidité = FTU | 5,5 (exprimée en unité Formazine selon ouvrage de J. Rodier page 65). |

II. L'adjuvant de floculation peut être un moût brut de fermentation comprenant un hétéropolysaccharide ou un hétéropolysaccharide isolé dont les préparations sont données à titre indicatif.

a) Moût de fermentation

A partir d'une culture de XANTHOMONAS CAMPESTRIS maintenue sur gélose en tube, on ensemence, à l'anse de platine, dans un ballon de 1 litre, 100 $cm^3$ de bouillon aux solubles de soja; ce milieu de culture comprend 20 g/l de saccharose et 90 $cm^3$/l de solubles de soja.

Après 72 heures d'incubation à 28° C, on utilise environ 0,15% en poids de cette culture pour inoculer, dans un fermenteur de 20 litres, 15 litres d'un milieu stérile ayant la composition suivante pour 1 litre:

| | |
|---|---|
| — Saccharose | 20 g |
| — Farine de soja | 4 g |
| — $Na_2HPO_4$, 12 $H_2O$ | 11,4 g |
| — $MgSO_4$, 7 $H_2O$ | 0,25 g |
| — Antimousse | 2 $cm^3$ |
| — Eau destillée | q.s.p. 1 litre |

L'ensemble possède un pH compris entre 6,9 et 7,5.

Après 24 heures d'incubation à 28° C, sous agitation et aération, on transfère 1,5% en poids du contenu de ce fermenteur de façon stérile, dans un fermenteur pilote de 1400 litres rempli d'une charge de 1000 litres d'un milieu stérile ayant la composition suivante pour 1 litre:

| | |
|---|---|
| — Saccharose | 20 g |
| — Farine de soja | 4 g |
| — $Na_2HPO_4$, 12 $H_2O$ | 11,4 g |
| — $MgSO_4$, 7 $H_2O$ | 0,25 g |
| — Antimousse | 0,5 $cm^3$ |
| — Eau distillée | q.s.p. 1 litre |

Le phosphate dipotassique tamponne de pH entre 6,9 et 7,5. Après 60 heures de fermentation à 28—30° C avec agitation et aération, on ne trouve plus de saccharose dans le milieu. La viscosité est 6900 mPa · S et la teneur en hétéropolysaccharide est de 15,6 g/kg de matière sèche.

On opère ensuite un traitement thermique de moût à 120° C pendant 30 minutes.

b) Hétéropolysaccharide

Le moût refoidi est additionné d'isopropanol, de façon classique pour précipiter l'hétéropolysaccharide qu'on lave, sèche et broie.

III. Cet hétéropolysaccharide sera mis en oeuvre conjointement avec l'agent floculant dans une série d'essais conduits de la manière qui suit. On conduit les essais comparatifs d'une manière identique.

Les essais sont effectués en JAR-TEST selon la méthode décrite dans l'ouvrage: la décantation de Degremont — mémento Technique de l'eau 1972 — (Degremont, page 932).

L'eau à traiter a été définie ci-dessus.

Les agents floculants sont ajoutés sous agitation rapide (120 T/mn) que l'on maintient 1 minute, plus une autre minute pour les adjuvants de floculation, l'agitation est ensuite diminuée jusqu'à 40 T/mn pendant 20 minutes.

Les agitateurs sont relevés et on laisse décanter 20 minutes.

Lors de la floculation, on note la grosseur du floc selon la cotation suivante (référence Degremont):

- 0 pas de floc
- 2 floc à peine visible
- 4 petits points
- 6 floc de dimension moyenne
- 8 bon floc
- 10 très bon floc

Lors de la décantation on note sa vitesse et on détermine sur le surnageant le pH, le TAC, la turbidité et les matières organiques.

On réalise une première série d'essais mettant en évidence l'influence de l'ordre d'introduction des réactifs.

## Exemples 1 à 3

L'exemple 1 est un exemple témoin, qui illustre l'emploi de sulfate d'aluminium sans adjuvant de floculation.

L'exemple 2 est conduit selon le procédé de l'invention qui consiste à ajouter l'hétéropolysaccharide après l'introduction de sulfate d'aluminium selon les conditions décrites précédement.

L'exemple 3 est un exemple comparatif dans lequel l'hétéropolysaccharide est ajouté simultanément au sulfate d'aluminium puis ils sont maintenus sous agitation rapide (120 T/mn) pendant 1 minute puis sous agitation lente (40 T/mn) pendant 20 minutes.

Dans les exemples selon le tableau I, on met en oeuvre une solution de sulfate d'aluminium hydratée à 100 g/l et une solution d'hétéropolysaccharide à 1 g/l.

Les résultats sont consignés dans le tableau I.

L'adjonction d'hétéropolysaccharide au sulfate d'aluminium selon le procédé de l'invention améliore la floculation et la décantation.

Par contre, lorque l'hétéropolysaccharide est introduit simultanément avec le sulfate d'aluminium, on ne constate aucune amélioration par rapport à l'utilisation seule de sulfate d'aluminium.

Tableaul

| Exemple | Agent Floculant | | Adjuvant de Floculation | | Taille du Floc | | | Decantation |
|---|---|---|---|---|---|---|---|---|
| | Nature | Dose $g/m^3$ | Nature | Dose $g/m^3$ | 5 mn | 10 mn | 15 mn | |
| 1 | Sulfate d'aluminium | 35 | | | >4 | <6 | <6 | Lente |
| 2 | Sulfate d'aluminium | 35 | Hétéropolysaccharide | 0,5 | 6 | 8 | 8 | Bonne |
| 3 | Sulfate d'aluminium | 35 | Hétéropolysaccharide | 0,5 | >4 | <6 | <6 | Lente |

On effectue une autre série d'essais mettant en oeuvre différents agents floculants seuls ou conjointment avec l'hétéropolysaccharide.

Exemples 4 à 13

Les exemples 4, 6, 8, 10 et 12 sont des exemples témoins sans adjuvant de floculation et portent sur la mise en oeuvre, à titre d'agent floculant, de sulfate d'aluminium, d'hydroxychlorure d'aluminium de formule:

$$Al_2(OH)_{2,5}Cl_3(SO_4)_{0,25},$$

de chlorure ferrique, de chlorosulfate ferrique, de chlorure d'aluminium.

Aux exemples 5, 7, 9, 11, 13, on a ajouté un hétéropolysaccharide selon le procédé de l'invention.

Dans les exemples selon le tableau II, on met en oeuvre une solution de sulfate d'aluminium hydratée à 630 g/l (soit 8% d'oxyde d'aluminium $Al_2O_3$), une solution de chlorure ferrique à 600 g/l (soit 200 g/l de fer), une solution de chlorosulfate ferrique à 685 g/l (soit 200 g/l de fer), une solution de chlorure d'aluminium à 700 g/l (soit 15% d'oxyde d'aluminium $Al_2O_3$). La solution d'hydroxychlorure d'aluminium est à 10% d'oxyde d'aluminium $Al_2O_3$. La solution d'hétéropolysaccharide est à 1 g/l.

Les résultats obtenus sont consignés dans le tableau II.

On note que d'une manière générale, il y a amélioration de la taille du floc et de l'action de décantation lors de la mise en oeuvre du procédé de l'invention.

Tableau II

| Ex. | Agent floculant Nature | Dose $cm^3/m^3$ | Adjuvant de floculation Nature | Dose $g/m^3$ | pH de l'eau | Turbidité | TAC | MO mg/l | Taille du floc 5 mn | Taille du floc 10 mn | Décantation |
|---|---|---|---|---|---|---|---|---|---|---|---|
| 4 | Sulfate d'aluminium | 50 | | | 7,5 | 1,1 | 17,2 | 1,15 | >4 | >4 | Lente |
| 5 | Sulfate d'aluminium | 50 | Hétéropolysaccharide | 0,5 | 7,6 | 0,7 | 16,8 | 1,06 | 6 | >6 | Bonne |
| 6 | Hydroxychlorure d'aluminium | 25 | | | 7,7 | 0,55 | 18,1 | 1,05 | 6 | ⩾6 | Bonne |
| 7 | Hydroxychlorure d'aluminium | 25 | Hétéropolysaccharide | 0,5 | 7,8 | 0,56 | 17,9 | 1,02 | 6 | <8 | Bonne |
| 8 | Chlorure ferrique | 25 | | | 7,5 | 0,85 | 16,2 | 0,90 | >6 | >6 | Bonne |
| 9 | Chlorure ferrique | 25 | Hétéropolysaccharide | 0,5 | 7,5 | 0,93 | 16,3 | 0,90 | <8 | 8 | Bonne |
| 10 | Chlorosulfate ferrique | 25 | | | 7,5 | 0,95 | 17 | 1 | 6 | 6 | Bonne |
| 11 | Chlorosulfate ferrique | 25 | Hétéropolysaccharide | 0,5 | 7,5 | 0,95 | 16,7 | 1 | >6 | 8 | Bonne |
| 12 | Chlorure d'aluminium | 50 | | | 7,3 | 0,80 | 15,4 | 1,1 | >4 | >4 | Lente |
| 13 | Chlorure d'aluminium | 50 | Hétéropolysaccharide | 0,5 | 7,3 | 0,65 | 14,8 | 1 | 6 | >6 | Bonne |

On effectue une série d'essais de floculation d'eau en présence uniquement d'hétéropolysaccharide.

Exemple 14

L'hétéropolysaccharide est utilisé à raison de 1, 2, 5 g/m³.

On constate qu'aucune floculation n'a lieu. L'eau reste trouble.

Dans les exemples suivants, on met en oeuvre, à titre comparatif, des adjuvants de floculation autres que l'hétéropolysaccharide associés à différents agents floculants.

Exemples 15 à 25

On compare les résultats obtenus avec un hétéropolysaccharide selon l'invention, avec ceux d'un alginate et divers gommes ou dérivés (caroube, agar-agar, guaranate) pour deux agents floculants donnés, le chlorosulfate ferrique et le sulfate d'aluminium.

L'eau à traiter a les caractéristiques suivantes:

| | |
|---|---|
| – Température | 18° C |
| – pH | 7,84 |
| – Turbidité: FTU | 5,5 |

Les résultats obtenus sont consignés dans le tableau III. On note une nette amélioration avec l'adjuvant de floculation selon l'invention.

Lex exemples suivants, illustrent l'emploi d'un moût de fermentation comme adjuvant de floculation.

Tableau III

| Ex. | Agent Floculant | | Adjuvant de Floculation | | pH | Turbidité | Floculation | Décantation |
|---|---|---|---|---|---|---|---|---|
| | Nature | Dose $cm^3/m^3$ | Nature | Dose $g/m^3$ | | | 10 mn | |
| 15 | Chlorosulfate ferrique | 25 | Alginate | 0,5 | 7,48 | 1,4 | >6 | Bonne |
| 16 | Chlorosulfate ferrique | 25 | Extrait de caroube | 0,5 | 7,48 | 1,8 | 6 | Moyenne |
| 17 | Chlorosulfate ferrique | 25 | Gomme agar-agar | 0,5 | 7,50 | 1,8 | <6 | Lente |
| 18 | Chlorosulfate ferrique | 25 | Guaranate | 0,5 | 7,49 | 1,8 | 6 | Moyenne |
| 19 | Chlorosulfate ferrique | 25 | Hétéropolysaccharide | 0,5 | 7,50 | 1,1 | 8 | Bonne |
| 20 | Chlorosulfate ferrique | 25 | | | 7,58 | 1,5 | <6 | Lente |
| 21 | Sulfate d'aluminium | 35 | Alginate | 1 | 7,4 | 2,2 | 6 | Moyenne |
| 22 | Sulfate d'aluminium | 35 | Extrait de caroube | 1 | 7,35 | 2,2 | 6 | Moyenne |
| 23 | Sulfate d'aluminium | 35 | Gomme agar-agar | 1 | 7,4 | 2,25 | 6 | Moyenne |
| 24 | Sulfate d'aluminium | 35 | Guaranate | 1 | 7,5 | 2,3 | 6 | Moyenne |
| 25 | Sulfate d'aluminium | 35 | Hétéropolysaccharide | 0,5 | 7,35 | 1,6 | <8 | Bonne |

Exemples 26 à 29

On utilise un moût de fermentation renfermant 15 g/l d'hétéropolysaccharide.

L'eau à traiter a les caractéristiques suivantes:

- Température 18° C
- pH 7,82
- Turbidité: FTU 9,3

Les résultats obtenus sont consignés dans le tableau IV. Dans ce tableau, l'adjuvant est exprimé en $g/m^3$ d'hétéropolysaccharide.

Les deux exemples suivants ont pour but de montrer l'influence d'un mélange d'agents floculants.

Exemples 30 et 31

Le mélange d'agents floculants comprend 75 $cm^3$ de chlorosulfate ferrique et 25 $cm^3$ de la solution de sulfate d'aluminium.

L'eau à traiter est celle des exemples 15 à 25.

A l'exemple 30, on rajoute 0,5 $g/m^3$ d'alginate, et à l'exemple 31, 0,5 $g/m^3$ d'hétéropolysaccharide selon l'invention.

Dans les deux cas, le pH de la solution est de 7,48 et la turbidité de 1,8. La décantation peut être considérée comme bonne, par contre la floculation est nettement améliorée par la substitution d'un hétéropolysaccharide selon l'invention puisqu'elle est voisine de 8 au lieu de 6.

Tableau IV

| Ex. | Agent Floculant | | Adjuvant de Floculation | | pH | Turbidité | Floculation | | Décantation |
|---|---|---|---|---|---|---|---|---|---|
| | Nature | Dose $g/m^3$ | Nature | Dose $g/m^3$ | | FTU | 5 mn | 10 mn | |
| 26 | Sulfate d'aluminium | 30 | | | 7,3 | 2 | >4 | >4 | Lente |
| 27 | Sulfate d'aluminium | 30 | Hétéropolysaccharide | 0,46 | 7,3 | 1,4 | 6 | >6 | Bonne |
| 28 | Sulfate d'aluminium | 30 | Hétéropolysaccharide | 0,61 | 7,3 | 1,5 | 6 | >6 | Bonne |
| 29 | Sulfate d'aluminium | 30 | Hétéropolysaccharide | 0,77 | 7,3 | 1,2 | 6 | <8 | Bonne |

## Revendications

1. Procédé de floculation pour la purification des eaux consistant à traiter celles-ci par un agent floculant constitué d'un sel de fer et/ou d'aluminium et par un adjuvant de floculation à base de polysaccharide, caractérisé par le fait que l'on traite une eau à un pH compris entre 6 et 9 d'abord par l'agent floculant, puis on ajoute, sous forte agitation, l'adjuvant de floculation, de dernier comprenant un hétéropolysaccharide de haute masse moléculaire obtenu par fermentation d'un hydrate de carbone sous l'action des bactéries du genre XANTHOMONAS, ARTHROBACTER ou des champignons du genre SCLEROTIUM.

2. Procédé selon la revendication 1 caractérisé par le fait que l'hétéropolysaccharide résulte de la fermentation d'un micro-organisme du genre XANTHOMONAS CAMPESTRIS.

3. Procédé selon l'une des revendications 1 et 2 caractérisé par le fait que l'on ajoute en même temps que l'agent floculant un additif constitué par un sel soluble dans le milieu d'un métal du groupe IIa de la classification périodique, de l'aluminium, du zinc, du cuivre et du manganèse.

## Patentansprüche

1. Flockungsverfahren für die Reinigung von Wasser durch Behandlung desselben mit einem Flockungsmittel, bestehend aus einem Eisen- und/oder Aluminiumsalz und aus einem Flockungshilfsmittel auf Polysaccharidbasis, dadurch gekennzeichnet, daß man Wasser bei einem pH zwischen 6 und 9 zunächst mit dem Flockungsmittel behandelt und daß man dann unter starkem Rühren das Flockungshilfsmittel zusetzt, wobei letzteres ein Heteropolysaccharid mit hoher Molekularmasse umfaßt, erhalten durch Fermentation eines Kohlenhydrats unter der Einwirkung von Bakterien des Genus Xanthomonas, Arthrobacter oder von Pilzen des Genus Sclerotium.

2. Verfahren gemäß Anspruch 1, dadurch gekennzeichnet, daß das Heteropolysaccharid von der Fermentation eines Mikroorganismus des Genus Xanthomonas Campestris stammt.

3. Verfahren nach einem der Ansprüche 1 und 2, dadurch gekennzeichnet, daß man gleichzeitig mit dem Flockungsmittel einen Zusatz zufügt, bestehend aus einem in dem Milieu löslichen Salz eines Metalls der Gruppe IIa des Periodensystems von Aluminium, Zink, Kupfer und Mangan.

## Claims

1. Flocculation process for water purification, which comprises treating the water with a flocculating agent comprising an iron and/or aluminium salt, and with a polysaccharide-based flocculating adjuvant, characterised in that, firstly, a water having a pH of between 6 and 9 is treated with the flocculating agent, and then the flocculating adjuvant is added, with vigorous agitation, the latter comprising a high molecular weight heteropolysaccharide obtained by fermenting a carbohydrate under the action of bacteria of the genus XANTHOMONAS or ARTHROBACTER or fungi of the genus SCLEROTIUM.

2. Process according to Claim 1, characterised in that the heteropolysaccharide results from the fermentation of a microorganism of the species XANTHOMONAS CAMPESTRIS.

3. Process according to one of Claims 1 and 2, characterised in that an additive comprising a salt, soluble in the medium, of a metal from group IIa of the periodic classification, aluminium, zinc, copper or manganese is added at the same time as the flocculating agent.